Europäisches Patentamt

European Patent Office

Office européen des brevets

(11) Veröffentlichungsnummer: **0 298 218 B1**

# EUROPÄISCHE PATENTSCHRIFT

(45) Veröffentlichungstag der Patentschrift: 14.08.91

(51) Int. Cl.⁵: **C22B  9/18**

(21) Anmeldenummer: 88107299.5

(22) Anmeldetag: 06.05.88

(54) Umschmelzofen mit gewichtsabhängiger Steuerung des Abschmelzblocks.

(30) Priorität: 09.07.87 DE 3722680

(43) Veröffentlichungstag der Anmeldung:
11.01.89 Patentblatt  89/02

(45) Bekanntmachung des Hinweises auf die
Patenterteilung:
14.08.91 Patentblatt  91/33

(84) Benannte Vertragsstaaten:
AT DE FR GB IT

(56) Entgegenhaltungen:
EP-A- 0 042 689
EP-A- 0 212 491
DE-B- 1 758 971
FR-A- 2 231 458

(73) Patentinhaber: LEYBOLD AKTIENGESELL-
SCHAFT
Wilhelm-Rohn-Strasse 25
W-6450 Hanau am Main 1(DE)

(72) Erfinder: Kohnert, Heinz
Odenwaldstrasse 58
W-6458 Rodenbach(DE)
Erfinder: Randa, Rudolf
Bärenstrasse 10
W-6450 Hanau 9(DE)
Erfinder: Stenzel, Otto, Dr.
Vonhäuser Strasse 50
W-6466 Gründau 4(DE)

## Beschreibung

Die Erfindung betrifft einen Umschmelzofen mit gewichtsabhängiger Steuerung des Abschmelzblocks mit einer die Ofenwandung durchdringenden, längsbeweglich angeordneten Halterung für den Abschmelzblock und mit einer die Halterung tragenden, über mindestens eine Gewindespindel in Vorschubrichtung bewegbaren Traverse und einem auf die Halterung einwirkenden, vom Druck in der Schmelzkammer beaufschlagbaren Hilfszylinder und einem Geber für die Gewichtsmessung des Abschmelzblocks.

Der Wägungs-Meßwert kann zur Strom- bzw. Leistungsprogrammierung, zur Druckprogrammierung u. dgl. verwendet werden. Die Schmelzratenregelung über die kontinuierliche Gewichtsmessung von Chargen wird häufig vorgezogen, weil die übrigen als Regelgrößen verwendbaren Werte wie beispielsweise der Elektrodenkurs und bei Umschmelzöfen unzuverlässige Angaben in bezug auf die zu regelnde Schmelzrate machen. Erfahrungsgemäß führt die Erfassung der Gewichtsabnahme der Charge pro Zeiteinheit, d.h. die Bildung des Differenzquotienten für Steuer- und Regelzwecke zu einer hohen Gleichförmigkeit des Schmelzvorganges. Durch die deutsche Patentschrift 1758971 ist es bekannt, einen kraftabhängigen Widerstand an einer unter dem Einfluß des Elektrodengewichtes stehenden Stelle der Abschmelzeinrichtung anzuordnen und die dadurch erhaltenen elektrischen Daten über einen Verstärker und ein Differenzierglied einem Steuergerät für die Abschmelzgeschwindigkeit aufzuschalten. Da die unstetig auftretenden Reibungskräfte eine ungleichförmige Abschmelzgeschwindigkeit vortäuschen und Regelvorgänge auslösen, die diesen Vorgang noch steigern können, sind bei der bekannten Vorrichtung bereits Kompensationsglieder vorgesehen. Weiterhin wird in der USA-Patentschrift 3 272 905 vorgeschlagen, den Geschwindigkeitsgeber an der Übergangsstellen von der Vorschubeinrichtung zum Elektrodenhalter anzubringen. Auf diese Weise werden zwar die Reibungskräfte einer ggf. vorhandenen Dichtung nicht vom Gewichtsgeber mitgemessen, der Geber befindet sich jedoch im Innern des Ofens im Wärmeeinfluß und wird vom Strom durchflossen, der einige zigtausend Ampere betragen kann. Außerdem ist ein solcher Geber bei hohen Elektrodengewichten und dem Hebelarm, den die Elektrode bildet, den harten Betriebsbedingungen beim Einsatz nur schwer gewachsen, was zwangsläufig wiederum die Meßgenauigkeit erheblich vermindert. Eine intensive Wasserkühlung des Gebers ist zudem unerläßlich.

Der vorliegenden Erfindung liegt nun die Aufgabe zugrunde, eine Vorrichtung mit gewichtsabhängiger Steuerung für einen Umschmelzofen zu schaffen, die geeignet ist, einen Abschmelzblock bzw. eine Elektrode von besonders hohem Gewicht und großem Durchmesser feinfühlig in die unter hohem Druck stehende Abschmelzkammer abzusenken. Insbesondere soll das sich während des Schmelzvorgangs ändernde Gewicht des Abschmelzblocks im möglichst engen Grenzen registrierbar sein, so daß der Schmelzvorgang in allen Phasen genau kontrollierbar bleibt.

Erfindungsgemäß wird dies durch einen mit der Traverse fest verbundenen, zur Schmelzkammer hin offenen, in diese eintauchenden und durch die Deckplatte der Schmelzkammer druckdicht hindurchgeführten Druckzylinder erreicht, durch dessen obere Stirnfläche die Halterung für den Abschmelzblock druckdicht hindurchgeführt ist, wobei die Halterung sich über den Geber auf der Traverse abstützt.

Um die Stromzuführungen für den Abschmelzblock und die Halterungen möglichst großzügig dimensionieren zu können, kann der Druckzylinder mit einer etwa flaschenförmigen Konfiguration versehen sein, wobei der zylindrische, einen kleineren Durchmesser aufweisende Halsteil über eine Gleitring-Dichtung durch eine Öffnung in der Deckplatte dichtend hindurchgeführt ist.

Mit Vorteil ist die Halterung für den Abschmelzblock aus einer Haltestange mit einem rohrförmigen, teilweise geschlitzten Endteil mit Kragen oder Flansch und einem über die Haltestange geschobenen Stromrohr mit einem Schlitze durchgreifenden Bügel mit einer an diesem fest angeordneten Haltestange gebildet, wobei der Flansch des Endteils über einen Balgen gegenüber der Stirnfläche des Druckzylinders abgedichtet und die Haltestange durch die zentrische Öffnung im Flansch hindurchgeführt ist und wobei der Flansch des Halterohrs über Zugstangen fest mit dem unteren Rahmenteil des Tragrahmens verbunden ist, der sich über den Geber auf der Traverse abstützt und die Haltestange über einen Quertab mit Hubzylindern beweglich an das untere Rahmenteil angelenkt ist.

In einer bevorzugten Ausführungsform der Erfindung weist der Druckzylinder Stromdurchführungen auf, über die der elektrische Strom von einer Stromquelle durch die Wand des Druckzylinders zum Stromrohr geleitet wird, wobei die stromführenden Kabel derart in Buchten geführt sind, daß sich sowohl das Stromrohr als auch der Druckzylinder unbehindert auf- und abwärts bewegen lassen.

Gemäß der weiteren Erfindung ist der die Halterung über einen Geber auf der Traverse abstützende Tragrahmen aus einem unteren und einem oberen horizontalen Rahmenteil und zwei diese Rahmenteile miteinander verbindende vertikal angeordnete Streben gebildet, wobei zwischen dem unteren Rahmenteil und der die beiden Gewindebuchsen der Spindeln miteinander verbindenden Traverse ein von einem Faltenbalg gebildeter Hilfszylinder und zwischen der Traverse und dem oberen Rahmenteil der Geber eingespannt ist.

Mit Vorteil ist auf dem das Bodenteil des Hilfszylinders bildenden unteren Rahmenteil ein sich lotrecht erstreckender Ausgleichszylinder fest angeordnet, dessen oberes offenes Ende in den Hilfszylinder einmündet, wobei im Ausgleichszylinder ein Kolben dichtend längsverschieblich geführt ist, der über eine lotrechte Kolbenstange mit der Haltestange des Stromrohres gekoppelt ist.

Um eine Entriegelung des Schmelzblocks von der Halterung zu ermöglichen, sind auf dem unteren Rahmenteil des Tragrahmens ein oder mehrere Hubzylinder abgestützt, deren Kolben über Tragestangen mit dem Querstab gekoppelt sind, der seinerseits fest mit der Haltestange verbunden ist derart, daß sich beim Betätigen der Hubzylinder die Haltestange für den Schmelzblock vertikal nach oben zu bewegt.

Damit die Faltenbalgen so klein wie möglich ausgebildet werden können, entspricht die vom Druck im Druckzylinder beaufschlagte wirksame Fläche des Halterohrs der Querschnittsfläche des vom Faltenbalg, dem unteren Rahmenteil und der Traverse gebildeten Hilfszylinders. Zweckmäßigerweise ist dabei der Innendurchmesser des Halsteils des Druckzylinders größer bemessen, als der wirksame Querschnitt des Hilfszylinders, der der vom Druck in der Schmelzkammer beaufschlagten Querschnittsfläche des Faltenbalgs entspricht.

Mit Vorteil ist der Geber außerhalb des Druckzylinders angeordnet, so daß Druckschwankungen in der Schmelzkammer ohne Einfluß auf die Gewichtsmessung bleiben. Im Falle, daß der Abschmelzblock auf dem unterhalb des Abschmelzblock angeordneten Schmelztiegel aufsetzt, erfährt der Geber eine Entlastung, wobei ein am Geber angeordneter wegabhängiger Schalter ein Signal an die Steuerelektronik gibt und für die Abschaltung der Vorrichtung sorgt.

Die Erfindung läßt die verschiedensten Ausführungsmöglichkeiten zu; eine davon ist in der anhängenden Zeichnung rein schematisch näher dargestellt.

Die Vorrichtung besteht im wesentlichen aus dem auf der die Schmelzkammer 2 nach oben zu abschließenden Deckplatte 3 drehbar in Stützlagern 20, 21 gelagerten beiden Spindeln 4, 5 mit dem diese verbindenden Joch 6, einer auf den beiden Spindeln 4, 5 in Gewindebuchsen 60, 61 geführten Traverse 7, dem an der Traverse 7 über Zuganker 9, 10 aufgehängten Druckzylinder 8, der im Druckzylinder 8 verschiebbaren Haltestange 11 mit der an dieser aufgehängten Schmelzelektrode 12, einem koaxial zur Haltestange 11 angeordneten Stromrohr 13, der das Stromrohr 13 nach oben zu verlängernden Haltestange 14 mit Querstab 15 und den an seinen beiden freien Enden befestigten Hubzylindern 16, 17 und dem die Haltestange 11 verlängernden mit Durchbrüchen oder Schlitzen 55, 56 versehenen Halterohr 18 mit Tragrahmen 19.

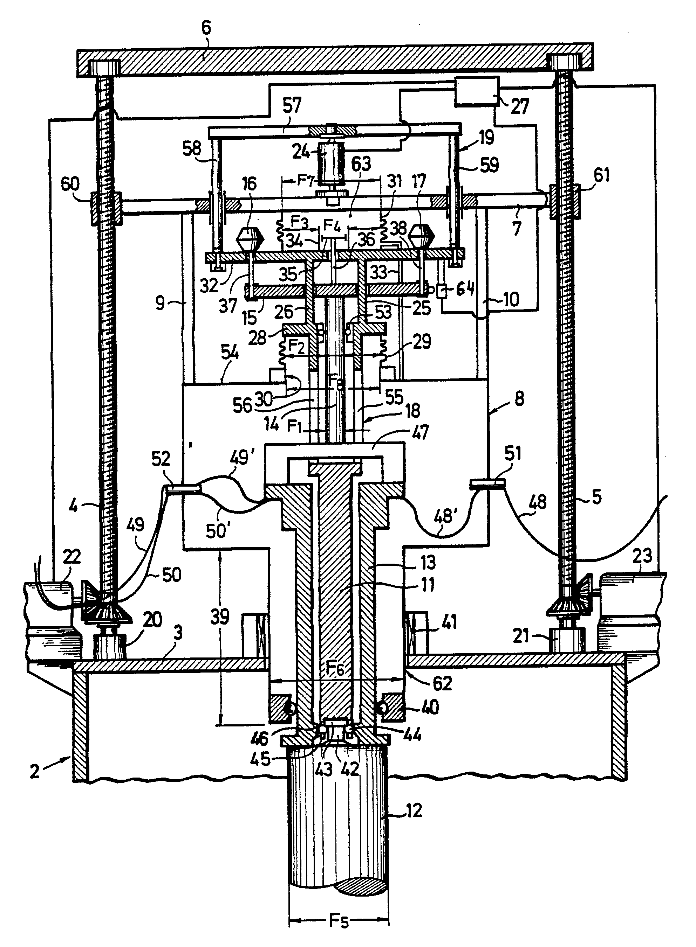

Die beiden auf der Deckplatte 3 in Stützlagern 20, 21 drehbar gelagerten Spindeln 4, 5 werden zum Absenken oder Anheben der Schmelzelektrode 12 von den Motoren 22, 23 in Drehung versetzt, wobei sich die Traverse 7 je nach Drehrichtung aufwärts oder abwärts bewegt. Da über die Zuganker 9, 10 auch der Druckzylinder 8 an der Traverse 7 befestigt ist, folgt dieser den Vertikalbewegungen der Traverse 7 ebenso, wie auch der Tragrahmen 19, der über das Kraft-Meßlager bzw. den Geber 24 auf der Traverse 7 aufliegt und an dem mit Hilfe der beiden Zugstangen 25, 26, dem Halterohr 18 und der Haltestange 11 die Schmelzelektrode 12 hängt. Das Kraft-Meßlager 24 ist mit einer in der Zeichnung nur schematisch angedeuteten Steuer-Elektronik 27 verbunden und ist geeignet ein Signal zu erzeugen, das jeweils dem genauen Gewicht der Schmelzelektrode 12 proportional ist.

Da während des Schmelzvorgangs in der Schmelzkammer ein beträchtlicher Überdruck, beispielsweise 40 bar, herrscht, wirkt dieser Druck auch auf die Querschnittsflächen $F_1$ der Haltestange 14 bzw. die Ringfläche $F_2$ des Flansches 28 des Halterohres 18. Um nun diese das Signal des Kraft-Meßlagers 24 beeinflussende Kraft $P \times F_2$ zu kompensieren, ist einerseits der Flansch 28 des Halterohres 18 über einen ersten Faltenbalg 29 mit dem Durchlaß 30 verbunden und ist andererseits ein zweiter Faltenbalg 31 als Hilfszylinder 63 zwischen der Traverse 7 und dem unteren Rahmenteil 32 des Tragrahmens 19 angeordnet, wobei das Innere dieses vom zweiten Faltenbalg 31 gebildeten Hilfszylinders 63 über einen Druckschlauch 33 an den Druckzylinder angeschlossen ist. Auf dem Rahmenteil 32 ist außerdem ein Ausgleichszylinder 34 befestigt, in dem ein Kolben 35 geführt ist, der über ein Kolbenstange 36 an den Querstab 15 gekoppelt ist und der den Bewegungen der Haltestange 14 und des Stromrohres 13 folgt. Auf dem Rahmenteil 32 des Tragrahmens 19 stützen sich die beiden Hubzylinder 16, 17 ab, deren Membranen oder Kolben über die Tragstangen 37, 38 mit dem Querstab 15 verbunden sind.

Zwischen dem Halsteil 39 der Druckkammer 8 und dem Stromrohr 13 ist ein Führungsrollenlager 40 vorgesehen, über das sichergestellt ist, daß eine Relativbewegung zwischen dem Stromrohr 13 mit Haltestange 14 und Querstab 15 einerseits und der Haltestange 11 mit Halterohr 18 andererseits von nennenswerten Reibkräften unbeeinflußt bleibt. Die Außenwanderung des Halsteils 39 des flaschenförmigen Druckzylinders 8 ist über eine Gleitdichtung 41 gegenüber der Deckplatte 3 der Schmelzkammer 2 druckfest abgedichtet, so daß der in der Schmelzkammer 2 herrschende Druck dem Druck in der Beschichtungskammer entspricht.

Die Schmelzelektrode 12 ist mit einem Zapfen 42 versehen, dessen verbreitertes Kopfteil 43 über Verriegelungskörper 44 an der Haltestange 11 abgestützt ist, wozu die Verriegelungskörper 44 einerseits in entsprechenden Ausnehmungen im rohrförmigen unteren Ende 45 der Haltestange 11 eingreifen und andererseits in das untere Kopfteil fassen, wobei sie an einer seitlichen Bewegung vom Bund 46 gehindert werden. Werden nun über die Hubzylinder 16, 17 der Querstab 15 mit der an diesem befestigten Haltestange 14 mit Bügel 47 und dem Stromrohr 13 gegenüber dem Rahmenteil 32 verschoben, so können sich die Verriegelungskörper 44 in ihren Ausnehmungen radial so weit nach außen zu verschieben, daß sie sich von dem Kopfteil 43 trennen, so daß der Zapfen 42 mit der Schmelzelektrode 12 nach unten zu herausgenommen werden kann.

Die Stromzuführung zur Schmelzelektrode 12 erfolgt über Kabel 48, 49, 50 bzw. 48', 49', 50', die über die Stromdurchführungen 51, 52 mit dem Stromrohr 13 verbunden sind. Es ist klar, daß die Führungs-Rollenlager 40 Strom isolierend ausgebildet sein müssen, da sich sonst auch die Druckkammer bzw. der Druckzylinder 8 und damit alle übrigen Teile der Vorrichtung auf dem gleichen elektrischen Potential befinden würden.

Da die Haltestangen 14 über eine Gleit-Dichtung 53 gegenüber dem Halterohr 18 abgedichtet ist, wirkt der im Druckzylinder 8 herrschende Druck auch auf die Querschnittsfläche F1 der Haltestange 14 und auch auf die Ringfläche F2 des Flansches 28 des Halterohres 18. Eine Kompensation dieser aufwärts gerichteten Kräfte erfolgt über den vom Faltenbalg 31 gebildeten Hilfszylinder 63, in dem der gleiche Druck herrscht, wie auch in der Druckkammer 8, wobei die Ringfläche F3 der Ringfläche F2 entspricht und die Querschnittsfläche F4 des Kolbens 35 der Querschnittsfläche F1 der Haltestange 14. Mit Hilfe des Kraft-Meßlagers 24 ist also stets das Gewicht der Schmelzelektrode 12 bestimmbar, da die eine Messung beeinflussenden Drücke in der Schmelzkammer 2 über den Hilfszylinder ausgeglichen werden.

Ein wesentlicher Vorteil der beschriebenen Vorrichtung besteht darin, daß auch Schmelzelektroden 12 von besonders hohem Gewicht und extrem großem Querschnitt F5 von der Vorrichtung feinfühlig gehandhabt werden können, da einerseits der Innendurchmesser F6 des Halsteils 39 der Druckkammer 8 praktisch beliebig groß gewählt werden kann, und andererseits der Durchmesser F7, F8 der beiden Faltenbälge 29, 31 vergleichsweise klein bleiben kann. Für eine feinfühlige Handhabung bzw. Steuerung des Schmelzelektroden-Vorschubs ist es aber besonders wichtig, die Faltenbälge 29, 31 so klein wie möglich zu wählen, da zum einen große Faltenbälge hohe Verfarmungskräfte verlangen und zum anderen höhere Drücke bei Faltenbälgen größere Durchmesser kaum noch zu beherrschen sind.

Schließlich sei noch auf den elektrischen Schalter 64 hingewiesen, der die Relativ-Bewegung zwischen dem Tragrahmen 19 und dem Querstab 15 abtastet und der so in den Stromkreis der Steuer-Elektronik 27 eingeschaltet ist, daß u.a. sichergestellt ist, daß der Strom-Übergang vom Stromrohr 13 zur Schmelzelektrode 12 an der Berührungsfläche zwischen der oberen Stirnfläche der Schmelzelektrode 12 und der unteren Stirnfläche des Stromrohrs 13 nicht unbeabsichtigt unterbrochen wird.

Der Tragrahmen 19, das Halterohr 18, die Haltestange 11 und das Stromrohr 13 mit der Haltestange 14, dem Querstab 15, den beiden Tragestangen 37, 38 und den beiden Hubzylindern 17, 18 bilden in Bezug auf die Reibung ein in sich geschlossenes Kräftesystem. Nach außen hin wirksam und vom Geber 24 senkrecht aufgenommen werden auch die Gewichte der Halterung 11, 13, 14, 18, sowie etwaiger zusätzlicher Hub-Führungs- und Gestängeelemente. Dies sind sämtlich Teile, deren Gewicht bekannt ist und somit schaltungstechnisch durch Potentiometerabgleich oder mechanisch, z.B. Durch Gegengewichte, ausgeglichen werden können. Die gleich großen Faltenbälge 29, 31 sind beide an einem von der Traverse 7, den Zugankern 9, 10 und dem kreisringförmigen oberen Deckelteil des Druckzylinders 8 gebildeten starren Rahmen einander gegenüberliegend gehalten, wodurch sich ihre Gewichte und auch die durch ihre Steifigkeit bedingten Kräfte ausgleichen.

## Patentansprüche

1. Umschmelzofen mit gewichtsabhängiger Steuerung des Abschmelzblocks (12) mit einer die Ofenwandung (3) durchdringenden, längsbeweglich angeordneten Halterung (11, 13, 14, 18) für den Abschmelzblock (12) und mit einer die Halterung (11, 13, 14, 18) tragenden, über mindestens eine Gewindespindel (4, 5) in Vorschubrichtung bewegbaren Traverse (7) und einen auf die Halterung (11, 13, 14, 18) einwirkenden, vom Druck in der Schmelzkammer (2) beaufschlagbaren Hilfszylinder (31) und einem Geber (24) für die Gewichtsmessung des Abschmelzblocks (12), gekennzeichnet durch einen mit der Traverse (7) fest verbundenen, zur Schmelzkammer (2) hin offenen, in diese eintauchenden und durch die Deckplatte (3) der Schmelzkammer (2) druckdicht hindurchgeführten Druckzylinder (8) durch dessen obere Stirnfläche (54) die Halterung (11, 13, 14, 18) für den Abschmelzblock (12) druckdicht hindurchgeführt ist, wobei die Halterung sich über den Geber (24) auf der Traverse (7) abstützt.

2. Umschmelzofen nach Anspruch 1, dadurch gekennzeichnet, daß der Druckzylinder (8) eine etwa flaschenförmige Konfiguration aufweist, wobei das zylindrische, einen kleineren Durchmesser aufweisende Halsteil (39) über eine Gleitring-Dichtung (41) in der Öffnung der Deckplatte (3) dichtend hindurchgeführt ist und wobei die Halterung (11, 13, 14, 18) von einem Rollenlager (40) am unteren offenen Ende des Halsteils (39) gehalten und geführt ist.

3. Umschmelzofen nach den Ansprüchen 1 und 2, dadurch gekennzeichnet, daß die Halterung für den Abschmelzblock (12) aus einer Haltestange (11) mit einem rohrförmigen, teilweise geschlitzten Endteil (18) mit Kragen oder Flansch (28) und einem über die Haltestange (11) geschobenen Stromrohr (13) mit einem die Schlitze (55, 56) durchgreifenden Bügel (47) mit einer an diesem fest angeordneten Haltestange (14) gebildet ist, wobei der Flansch (28) des Endteils (18) über einen Balgen (29) gegenüber der Stirnfläche (54) des Druckzylinders (8) abgedichtet und die Haltestange (14) durch die zentrische Öffnung im Flansch (28) hindurchgeführt ist und wobei der Flansch (28) fest mit dem unteren Rahmenteil (32) des Tragrahmens (19) verbunden ist, der sich über den Geber (24) auf der Traverse (7) abstützt und die Haltestange (14) über einen Querstab (15) mit Hubzylindern (16, 17) beweglich an das untere Rahmenteil (32) angelenkt ist.

4. Umschmelzofen nach einem oder mehreren der vorhergehenden Ansprüche, dadurch gekennzeichnet, daß der Druckzylinder (8) Stromdurchführungen (51, 52) aufweist, über die der elektrische Strom von einer Stromquelle durch die Wand des Druckzylinders (8) zum Stromrohr (13) geleitet wird, wobei die stromführenden Kabel (48, 49, 50 bzw. 48', 49', 50') derart in Buchten geführt sind, daß sich sowohl das Stromrohr (13), als auch der Druckzylinder (8) unbehindert auf- und abwärts bewegen lassen.

5. Umschmelzofen nach einem oder mehreren der vorhergehenden Ansprüche, dadurch gekennzeichnet, daß der die Halterung (11, 13, 14, 18) über einen Geber (24) auf der Traverse (7) abstützende Tragrahmen (19) aus einem unteren und einem oberen horizontalen Rahmenteil (32 bzw. 57) und zwei diese Rahmenteile miteinander verbindende vertikal angeordnete Streben (58, 59) gebildet ist, wobei zwischen dem unteren Rahmenteil (32) und der die beiden Gewindebuchsen (60, 61) der Spindeln (4, 5) miteinander verbindenden Traverse (7) ein von einem Faltenbalg (31) gebildeter Hilfszylinder (63) und zwischen der Traverse (7) und dem oberen Rahmenteil (57) der Geber (24) eingespannt ist.

6. Umschmelzofen nach einem oder mehreren der vorhergehenden Ansprüche, dadurch gekennzeichnet, daß auf dem das Bodenteil des Hilfszylinders (63) bildenden unteren Rahmenteil (32) ein sich lotrecht erstreckender Ausgleichszylinder (34) fest angeordnet ist, dessen oberes offenes Ende in den Hilfszylinder (63) einmündet, wobei im Ausgleichszylinder (34) ein Kolben (35) dichtend längsverschieblich geführt ist, der über eine lotrechte Kolbenstange (36) mit der Haltestange (14) des Stromrohres (13) gekoppelt ist.

7. Umschmelzofen nach einem oder mehreren der vorhergehenden Ansprüche, dadurch gekennzeichnet, daß auf dem unteren Rahmenteil (32) des Tragrahmens (19) ein oder mehrere Hubzylinder (16, 17) abgestützt sind, deren Kolben über Tragstangen (37, 38) mit dem Querstab (15) gekoppelt sind, der seinerseits fest mit der Haltestange (14) verbunden ist derart, daß sich beim Betätigen der Hubzylinder (16, 17) die Haltestange (14) für das Stromrohr (13) gegenüber der Haltestange (11) für den Schmelzblock (12) vertikal nach oben zu bewegt.

8. Umschmelzofen nach einem oder mehreren der vorhergehenden Ansprüche, dadurch gekennzeichnet, daß die vom Druck im Druckzylinder (8) beaufschlagte wirksame Ringfläche (F2) des Halterohres (18) der Querschnittsfläche (F7) des vom Faltenbalg (31), dem unteren Rahmenteil (32) und der Traverse (7) gebildeten Hilfszylinders (63) abzüglich der Querschnittsfläche (F4) des Kolbens (35) des Ausgleichszylinders (34) entspricht.

9. Umschmelzofen nach einem oder mehreren der vorhergehenden Ansprüche, dadurch gekennzeichnet, daß der Innendurchmesser (F6) des Halsteils (39) des Druckzylinders (8) größer bemessen ist, als der wirksame Querschnitt (F7) des Hilfszylinders (63), der der vom Druck in der Schmelzkammer (12) beaufschlagten Querschnittsfläche (F8) des Faltenbalgs (29) entspricht.

10. Umschmelzofen nach einem oder mehreren der vorhergehenden Ansprüche, dadurch gekennzeichnet, daß der Geber (24) außerhalb des Druckzylinders (8) in der freien Atmosphäre angeordnet ist und über einen im Gestänge eingeschalteten Hilfszylinder (63) druckkompensiert ist.

11. Umschmelzofen nach einem oder mehreren der vorhergehenden Ansprüche, dadurch ge-kennzeichnet, daß bei aufsitzendem Ab-schmelzblock (12) der Geber (24) eine Kraft-Entlastung erfährt, wobei ein am Geber (24) angeordneter wegabhängig arbeitender Schalter ein elektrisches Signal für die Steuerung des Vorschubs erzeugt.

**Claims**

1. Remelting furnace with gravimetric control of the ingot (12), having
   - a mount (11, 13, 14, 18) for the ingot (12) penetrating the furnace wall (3) and mounted movably in the longitudinal direction
   - a crossbeam (7) carrying the mount via at least one threaded spindle (4, 5) and being movable in the forward feed direction, and an auxiliary cylinder (31) acting on the mount (11, 13, 14, 18) and being actuatable by the pressure in the melting chamber (2)
   - and a transmitter (24) for measuring the weight of the ingot (12),
   characterised by a pressure cylinder (8) rigidly connected to the crossbeam (7), open to the melting chamber (2), immersed therein and penetrating the cover plate (3) of the melting chamber (2) in a pressure-tight manner, the mount (11, 13, 14, 18) for the ingot (12) penetrating the upper end face (54) of the pressure cylinder (8) in a pressure-tight manner and bearing on the crossbeam (7) via the transmitter (24).

2. Remelting furnace according to claim 1, characterised in that the pressure cylinder (8) can have an approximately bottle-shaped configuration, the cylindrical neck part (39), which has a smaller diameter, penetrating in a sealing-tight manner an aperture in the cover plate (3) via a slide ring seal (41), the mount (11, 13, 14, 18) being held and guided by a roller bearing (40) at the lower, open end of the neck part (39).

3. Remelting furnace according to claims 1 and 2, characterised in that the mount for the ingot (12) consists of a stay bar (11) with a tubular, partly slotted end part (18) with a collar or flange (28) and a current tube (13) mounted over the stay bar (11) with a shackle (47) penetrating the slots (55, 56) with a stay bar (14) rigidly connected to said shackle (47), in which case the flange (28) of the end part (18) provides a seal with respect to the end face (54) of the pressure cylinder (8) via a bellows (29), and the stay bar (14) penetrates the central aperture in the flange (28), and the flange (28) is rigidly connected to the lower frame part (32) of the supporting frame (19), which bears on the crossbeam (7) via the transmitter (24), and the stay bar (14) is coupled movably to the lower frame part (32) via a crossbar (15) with hydraulic jacks (16, 17).

4. Remelting furnace according to one or more of the preceding claims, characterised in that the pressure cylinder (8) has current conduits (51, 52) via which the electric current is supplied from a power source through the wall of the pressure cylinder (8) to the current tube (13), the current-carrying cables (48, 49, 50 and 48', 49', 50' respectively) being so guided in recesses that both the current tube (13) and the pressure cylinder (8) can be moved freely up and down.

5. Remelting furnace according to according to one or more of the preceding claims, characterised in that the supporting frame (19) supporting the mount (11, 13, 14, 18) on the crossbeam (7) via a transmitter (24) is formed of a lower and an upper horizontal frame part (32 or 57 respectively) and two vertical struts (58, 59) connecting these frame parts together, in which case an auxiliary cylinder (63) formed of a folding bellows (31) is mounted between the lower frame part (32) and the crossbeam (7) connecting together the two threaded bushings (60, 61) of the spindles (4, 5), and the transmitter (24) is mounted between the crossbeam (7) and the upper frame part (57).

6. Remelting furnace according to one or more of the preceding claims, characterised in that on the lower frame part (32) forming the bottom part of the auxiliary cylinder (63), a vertical compensating cylinder (34) is rigidly mounted, whose upper open end opens into the auxiliary cylinder (63), in which case a piston (35), which is coupled to the stay bar (14) of the current tube (13) via a vertical piston rod (36), is guided in a sealing-tight manner and longitudinally displaceably in the compensating cylinder (34).

7. Remelting furnace according to one or more of the preceding claims, characterised in that on the lower frame part (32) of the supporting frame (19), one or more hydraulic jacks (16, 17) are supported, whose pistons are coupled via supporting rods (37, 38) to the crossbar (15), which is itself rigidly connected to the stay bar (14) in such a manner that when the hydraulic jacks (16, 17) are actuated, the stay bar (14) for the current tube (13) moves vertically upwards relative to the stay bar (11) for the ingot (12).

8. Remelting furnace according to one or more of the preceding claims, characterised in that the active annular area (F2) of the holding tube (18) actuated by the pressure in the pressure cylinder (8) corresponds to the cross-sectional area (F7) of the auxiliary cylinder (63) formed by the folding bellows (31), the lower frame part (32) and the crossbeam (7), less the cross-sectional area (F4) of the piston (35) of the compensating cylinder (34).

9. Remelting furnace according to one or more of the preceding claims, characterised in that the inner diameter (F6) of the neck part (39) of the pressure cylinder (8) is larger than the active cross-section (F7) of the auxiliary cylinder (63), which corresponds to the cross-sectional surface (F8) of the folding bellows (29) actuated by the pressure in the melting chamber (2).

10. Remelting furnace according to one or more of the preceding claims, characterised in that the transmitter (24) is mounted outside the pressure cylinder (8) in the open atmosphere and is pressure compensated via an auxiliary cylinder (63) connected in the linkage.

11. Remelting furnace according to one or more of the preceding claims, characterised in that when the ingot (12) is deposited, the transmitter (24) undergoes a discharge of force, and a switch operating in a distance-dependent manner and mounted on the transmitter (24) generates an electric signal for controlling the forward feed.

**Revendications**

1. Four de refusion à commande du bloc fusible (12) en fonction de son poids, comprenant un support (11, 13, 14, 18) pour le bloc fusible (12), support qui traverse la paroi (3) du four et est disposé mobile longitudinalement, une traverse (7) portant le support (11, 13, 14, 18) et déplaçable dans 1e sens de l'avancement au moyen d'au moins une broche filetée (4, 5), un cylindre auxiliaire (31) agissant sur 1e support (11, 13, 14, 18) et auquel peut être appliquée la pression régnant dans la chambre de fusion (2), ainsi qu'un capteur (24) pour mesurer le poids du bloc fusible (12), caractérisé par un cylindre de pression (8) relié rigidement à la traverse (7), ouvert vers la chambre de fusion (2), plongeant dans cette chambre et traversant de manière étanche à la pression la plaque de recouvre-ment (3) de la chambre de fusion (2), le support (11, 13, 14, 18) pour le bloc fusible (12) traversant de manière étanche à la pression la face d'extrémité supérieure (54) du cylindre de pression (8) et le support s'appuyant sur la traverse (7) avec interposition du capteur (24).

2. Four de refusion selon la revendication 1, caractérisé en ce que le cylindre de pression (8) possède une configuration à peu près en forme de bouteille, la partie cylindrique de plus petit diamètre ou col (39) traversant une ouverture de la plaque de recouvrement (3), dans laquelle cette partie est étanchée par une garniture annulaire à glissement (41), et le support (11, 13, 14, 18) étant maintenu et guidé par un palier à rouleaux (40) à l'extrémité inférieure ouverte de la partie formant le col (39).

3. Four de refusion selon les revendications 1 et 2, caractérisé en ce que le support pour le bloc fusible (12) est constitué d'une barre de support (11) possédant une partie extrême tubulaire (18) qui est partiellement fendue et pourvue d'un col ou bride (28), ainsi que d'un tube d'amenée de courant (13) enfilé autour de la barre de support (11) et portant un étrier (47) qui traverse les fentes (55, 56) et sur lequel est disposée fixe une tige de support (14), la bride (28) de la partie extrême (18) étant étanchée par un soufflet (29) vis-à-vis de la face d'extrémité (54) du cylindre de pression (8), la tige de support (14) étant guidée à travers l'ouverture centrale de la bride (28) et la bride (28) étant reliée rigidement à la partie inférieure (32) d'un cadre porteur (19) qui s'appuie avec interposition du capteur (24) sur la traverse (7), la tige de support (14) étant articulée mobile à la partie inférieure (32) du cadre par une barre transversale (15) à laquelle sont combinés des vérins (16, 17).

4. Four de refusion selon une ou plusieurs des revendications précédentes, caractérisé en ce que le cylindre de pression (8) présente des traversées de courant (51, 52) par lesquelles le courant électrique est amené à partir d'une source de courant à travers la paroi du cylindre de pression (8) au tube d'amenée de courant (13), les câbles d'alimentation (48, 49, 50 et 48', 49', 50') étant disposés en boucles, de manière que le tube d'amenée de courant (13) et le cylindre de pression (8) puissent être relevés et descendus sans entraves.

5. Four de refusion selon une ou plusieurs des revendications précédentes, caractérisé en ce que le cadre porteur (19), par lequel le support (11, 13, 14, 18) s'appuie la traverse (7), avec interposition du capteur (24), se compose d'une partie inférieure (32) et d'une partie supérieure (57) qui sont horizontales, ainsi que de deux entretoises (58, 59) disposées verticalement et reliant les parties horizontales du cadre entre elles, un cylindre auxiliaire (63), formé par un soufflet (31), étant disposé entre la partie inférieure (32) du cadre et la traverse (7), laquelle relie entre eux deux manchons-écrous (60, 61) traversés par les broches filetées (4, 5), et le capteur (24) étant monté entre la traverse (7) et la partie supérieure (57) du cadre.

6. Four de refusion selon une ou plusieurs des revendications précédentes, caractérisé en ce qu'un vérin de compensation (34) est disposé fixe, en position verticale, sur la partie inférieure (32) du cadre, laquelle forme le fond du cylindre auxiliaire (63), l'extrémité supérieure ouverte du vérin de compensation débouchant dans le cylindre auxiliaire (63) et un piston (35) étant guidé à joint étanche pour pouvoir coulisser longitudinalement dans le vérin de compensation (34), piston qui est accouplé par une tige de piston (36) verticale à la tige de support (14) du tube d'amenée de courant (13).

7. Four de refusion selon une ou plusieurs des revendications précédentes, caractérisé en ce qu'un ou plusieurs vérins (16, 17) sont appuyés sur la partie inférieure (32) du cadre porteur (19) et sont reliés par leurs pistons et par l'intermédiaire de tiges porteuses (37, 38) à la barre transversale (15), elle-même reliée rigidement à la tige de support (14), de manière que lors de la manoeuvre des vérins (16, 17), la tige de support (14) pour le tube d'amenée de courant (13) se déplace verticalement vers le haut par rapport à la barre de support (11) pour le bloc fusible (12).

8. Four de refusion selon une ou plusieurs des revendications précédentes, caractérisé en ce que la face utile annulaire (F2) de la partie extrême tubulaire (18), formant un tube porteur, face sur laquelle agit la pression régnant dans le cylindre de pression (8), correspond à l'aire de section droite (F7) du cylindre auxiliaire (63), formé par le soufflet (31), la partie inférieure (32) du cadre et la traverse (7), moins l'aire de section droite (F4) du piston (35) du vérin de compensation (34).

9. Four de refusion selon une ou plusieurs des revendications précédentes, caractérisé en ce que le diamètre intérieur (F6) de la partie formant le col (39) du cylindre de pression (8) est plus grand que celui correspondant à la section utile (F7) du cylindre auxiliaire (63), correspondant elle-même à l'aire de section droite (F8) du soufflet (29), sur laquelle agit la pression régnant dans la chambre de fusion (2).

10. Four de refusion selon une ou plusieurs des revendications précédentes, caractérise en ce que le capteur (24) est disposé à l'extérieur du cylindre de pression (8) à l'atmosphère libre et est compensé en pression au moyen d'un cylindre auxiliaire (63) incorporé dans le mécanisme de transmission.

11. Four de refusion selon une ou plusieurs des revendications précédentes, caractérisé en ce que, lorsque le bloc fusible (12) est appuyé de manière qu'il ne puisse pas descendre, le capteur (24) est déchargé de la force agissant normalement sur lui et un interrupteur combiné au capteur (24) et actionné en fonction d'une course, génère un signal électrique pour la commande de l'avance.